# EUROPEAN PATENT APPLICATION

(11) **EP 4 424 544 A1**
(43) Date of publication of application: **04.09.2024**
(21) Application number: 23159890.5
(22) Date of filing: 03.03.2023
(51) Int. Cl.: B60L 53/31, B60L 53/51, B60L 53/64

(54) **CHARGING METHOD, CHARGING APPARATUS, ELECTRONIC DEVICE AND COMPUTER PROGRAM PRODUCT**

(71) Applicant: Beijing X-CHARGE Technology Co., Ltd., Beijing 100085 (CN)
(72) Inventor: CHEN, Lei, Beijing, 100085 (CN); WANG, Junshuai, Beijing, 100085 (CN); KONG, Xiangzhi, Beijing, 100085 (CN); LAN, Xin, Beijing, 100085 (CN)
(74) Representative: Dr. Gassner & Partner mbB

(57) **Abstract**

The present application relates to a charging method, a charging apparatus, electronic device and a computer program product. The method includes obtaining a power requirement at current moment; adjusting a power supply strategy of a photovoltaic assembly according to the power requirement to meet the power requirement at current moment, and determining whether there is a charging requirement in the power requirement at current moment, if there is a charging requirement at current moment, charging the vehicle with a photovoltaic electric energy; if not, storing the photovoltaic electric energy in a battery and/or adjusting the photovoltaic electric energy according to power grid parameters and transmitting to a power grid. Therefore, the power supply strategy of the photovoltaic assembly can be flexibly adjusted, taking full use of the photovoltaic electric energy generated by the photovoltaic assembly, reducing the idle of the photovoltaic electric energy, reducing the energy waste, and meeting the power requirement at different times.

## Description

### TECHNICAL FIELD

The present application relates to a field of intelligent charging, and in particular, relates to a charging method, a charging apparatus, electronic device, and a computer program product.

### BACKGROUND ART

With the increasingly serious global environmental pollution and the constantly rising petroleum price, electric vehicles gradually become an optimized choice as a conveyance for people.

Due to the feature of consuming electrical energy of the electric vehicle, it is extremely time consumed to charge the electric vehicle using household 220V alternating current. Therefore, many operators choose to establish charging fields. A plurality of batteries and a plurality of charging piles are configured in the charging field, using the power grid to realize a fast direct current charging for electric vehicles, which greatly reduces the problem that the users spend too much time on charging when the electric energy is exhausted during driving.

Accordingly, due to the high cost of using the power grid to charge electric vehicles, the operators also use the electricity generated by photovoltaic to charge electric vehicles. However, the electricity generated by the photovoltaic leaves unused when no car needs to be charged, which leads to an invalid consumption of electricity generated by the photovoltaic.

### SUMMARY

The present application provides a charging method, a charging apparatus, electronic device, and a computer program product.

In a first aspect, the present application provides a charging method. The method includes the following steps:
obtaining a power requirement at current moment;
adjusting a power supply strategy of a photovoltaic assembly according to the power requirement to meet the power requirement at current moment.

Optionally, the step of adjusting a power supply strategy of a photovoltaic assembly according to the power requirement to meet the power requirement at current moment includes:
determining whether there is a charging requirement in the power requirement at current moment,
if there is a charging requirement at current moment, charging the vehicle with a photovoltaic electric energy;
if not, storing the photovoltaic electric energy in a battery and/or adjusting the photovoltaic electric energy according to power grid parameters and transmitting to a power grid.

Optionally, the step of charging the vehicle with a photovoltaic electric energy includes:
determining whether the photovoltaic electric energy is higher than a preset electric energy threshold value,
if the photovoltaic electric energy is higher than the preset electric energy threshold value, charging the vehicle with the photovoltaic electric energy, storing remaining photovoltaic electric energy in the battery, and/or, adjusting remaining photovoltaic electric energy according to power grid parameters and transmitting to a power grid;
if the photovoltaic electric energy is lower than the preset electric energy threshold value, charging the vehicle with the photovoltaic electric energy, battery and/or power grid.

Optionally, the step of charging the vehicle with the photovoltaic electric energy, storing the remaining photovoltaic electric energy in the battery, and/or, adjusting the remaining photovoltaic electric energy according to power grid parameters and transmitting to a power grid if the photovoltaic electric energy is higher than the electricity threshold value includes:
when the photovoltaic electric energy is higher than the electricity threshold value, obtaining a power grid electricity price at current moment;
if the power grid electricity price is lower than a preset electricity price threshold value, charging the vehicle with the photovoltaic electric energy, and storing the remaining photovoltaic electric energy in the battery;
if the power grid electricity price is higher than the preset electricity price threshold value, charging the vehicle with the photovoltaic electric energy, and adjusting the remaining photovoltaic electric energy according to power grid parameters and transmitting to a power grid.

Optionally, the step of charging the vehicle with the photovoltaic electric energy further includes:
determining whether the charging requirement at current moment is lower than a preset requirement threshold value, and whether a battery power is higher than a preset power threshold value,
if the charging requirement at current moment is lower than the preset requirement threshold value and the battery power is higher than the preset power threshold value, transmitting the battery to the power grid.

Optionally, the step of storing the photovoltaic electric energy in the battery, and/or, adjusting the photovoltaic electric energy according to power grid parameters and transmitting to a power grid includes:
determining a photovoltaic conversion rate at current moment;
if the photovoltaic conversion rate at current moment is higher than a preset conversion threshold value, adjusting the photovoltaic electric energy according to power grid parameters and transmitting to a power grid;
if the photovoltaic conversion rate at current moment is lower than the preset conversion threshold value, storing the photovoltaic electric energy in the battery.

Optionally, the step of storing the photovoltaic electric energy in a battery and/or adjusting the photovoltaic electric energy according to power grid parameters and transmitting to a power grid if there is no charging requirement at current moment includes:
when there is no charging requirement at current moment, obtaining a power grid electricity price at current moment;
if the power grid electricity price is lower than a preset electricity price threshold value, storing the photovoltaic electric energy in the battery, and adjusting the remaining photovoltaic electric energy according to power grid parameters and transmitting to a power grid;
if the power grid electricity price is higher than the preset electricity price threshold value, charging the vehicle with the photovoltaic electric energy, and adjusting the photovoltaic electric energy according to power grid parameters and transmitting to a power grid.

Optionally, the step of adjusting the photovoltaic electric energy according to power grid parameters and transmitting to a power grid includes:
obtaining a commercial power consumption at current moment,
if the commercial power consumption is higher than a preset power consumption threshold value, adjusting the photovoltaic electric energy according to commercial power parameters to serve as the commercial power.

Optionally, the step of charging the vehicle with the photovoltaic electric energy includes:
determining whether the power grid is energized at current moment,
if the power grid is out of electricity, starting a charging pile by using the photovoltaic electric energy, and charging the vehicles through the charging pile.

In a second aspect, the present application provides a charging apparatus, including a battery, an energy management module, a grid on-off inverter, and a photovoltaic assembly.

The photovoltaic assembly is separately connected to the battery and the grid on-off inverter, which is configured to convert light energy into photovoltaic electric energy, store the photovoltaic electric energy in the battery, and/or, to perform a conversion of the photovoltaic electric energy between an alternating current and a direct current by using the grid on-off inverter to meet the power requirement at current moment;
the energy management module is separately connected to the battery, the photovoltaic assembly and the grid on-off inverter, which is configured to obtain the power requirement at current moment and adjust the power supply strategy of the photovoltaic assembly according to the power requirement by using the battery and the grid on-off inverter to meet the power requirement at current moment;
the battery is connected to the grid on-off inverter, which is configured to adjust the battery and transmit the battery electricity to the power grid according to the power requirement at current moment when the photovoltaic electric energy is higher than a preset electric energy threshold value.

In a third aspect, the present application provides a charging apparatus, including:
a requirement obtaining module, configured to obtain the power requirement at current moment; and
a power supply strategy adjusting module, configured to adjust the power supply strategy of the photovoltaic assembly according to the power requirement to meet the power requirement at current moment.

Optionally, the power supply strategy adjusting module is configured to:
determine whether there is a charging requirement in the power requirement at current moment,
if there is a charging requirement at current moment, charge the vehicle with a photovoltaic electric energy;
if there is no charging requirement at the current moment, store the photovoltaic electric energy in a battery and/or adjust the photovoltaic electric energy according to power grid parameters and transmit to a power grid.

Optionally, when charging the vehicle with the photovoltaic electric energy, the power supply strategy adjusting module is configured to:
determine whether the photovoltaic electric energy is higher than a preset electric energy threshold value,
if the photovoltaic electric energy is higher than the preset electric energy threshold value, charge the vehicle with the photovoltaic electric energy, store the remaining photovoltaic electric energy in the battery, and/or, adjust the remaining photovoltaic electric energy according to power grid parameters and transmit to a power grid;
if the photovoltaic electric energy is lower than the preset electric energy threshold value, charge the vehicle with the photovoltaic electric energy, battery and/or power grid.

Optionally, when charging the vehicle with the photovoltaic electric energy, storing the remaining photovoltaic electric energy in the battery, and/or, adjusting the remaining photovoltaic electric energy according to power grid parameters and transmitting to a power grid if the photovoltaic electric energy is higher than the preset electric energy threshold value, the power supply strategy adjusting module is configured to:
when the photovoltaic electric energy is higher than the electricity threshold value, obtain a power grid electricity price at current moment;
if the power grid electricity price is lower than the electricity price threshold value, charge the vehicle with the photovoltaic electric energy, and store the remaining photovoltaic electric energy in the battery;
if the power grid electricity price is higher than the electricity price threshold value, charge the vehicle with the photovoltaic electric energy, and adjust the remaining photovoltaic electric energy according to power grid parameters and transmitting to a power grid.

Optionally, when charging the vehicle with the photovoltaic electric energy, the power supply strategy adjusting module is further configured to:
determine whether the charging requirement at current moment is lower than a preset requirement threshold value, and whether a battery power is higher than a preset power threshold value,
if the charging requirement at current moment is lower than the preset requirement threshold value and the battery power is higher than the preset power threshold value, transmit the battery to the power grid.

Optionally, when storing the photovoltaic electric energy in the battery, and/or, adjusting the photovoltaic electric energy according to power grid parameters and transmitting to a power grid, the power supply strategy adjusting module is configured to:
determine a photovoltaic conversion rate at current moment;
if the photovoltaic conversion rate at current moment is higher than a preset conversion threshold value, adjust the photovoltaic electric energy according to power grid parameters and transmit to a power grid;
if the photovoltaic conversion rate at current moment is lower than the preset conversion threshold value, store the photovoltaic electric energy in the battery.

Optionally, when storing the photovoltaic electric energy in a battery and/or adjusting the photovoltaic electric energy according to power grid parameters and transmitting to a power grid if there is no charging requirement at current moment, the power supply strategy adjusting module is configured to:
when there is no charging requirement at current moment, obtain a power grid electricity price at current moment;
if the power grid electricity price is lower than a preset electricity price threshold value, store the photovoltaic electric energy in the battery, and adjust the remaining photovoltaic electric energy according to power grid parameters and transmitting to a power grid;
if the power grid electricity price is higher than the preset electricity price threshold value, charging the vehicle with the photovoltaic electric energy, and adjusting the photovoltaic electric energy according to power grid parameters and transmitting to a power grid.

Optionally, when adjusting the photovoltaic electric energy according to power grid parameters and transmitting to a power grid, the power supply strategy adjusting module is configured to:
obtain commercial power consumption at current moment,
if the commercial power consumption is higher than a preset power consumption threshold value, adjust the photovoltaic electric energy according to commercial power parameters to serve as the commercial power.

Optionally, when charging the vehicle with the photovoltaic electric energy, the power supply strategy adjusting module is configured to:
determine whether the power grid is energized at current moment,
if the power grid is out of electricity, start a charging pile by using the photovoltaic electric energy, and charge the vehicles through the charging pile.

In a fourth aspect, the present application provides an electronic device, including a memory and a processor, in which a computer program that can be loaded by the processor and execute the method according to the first aspect is stored in the memory.

In a fifth aspect, the present application provides a computer program product, including: a computer program, in which when the computer program is executed, the method according to the first aspect is realized.

The present application provides a charging method, a charging apparatus, an electronic device and a computer program product. Therefore, the power supply strategy of the photovoltaic assembly can be flexibly adjusted, taking full use of the photovoltaic electric energy generated by the photovoltaic assembly, reducing the idle of the photovoltaic electric energy, reducing the energy waste, and meeting the power requirement at different times.

When it is determined that there is a charging requirement at current moment, the vehicles are charged preferentially using the photovoltaic electric energy, ensuring the basic charging requirement. When there is no charging requirement, the photovoltaic electric energy can be stored in the battery, and/or, the photovoltaic electric energy can be introduced in the power grid to use, reducing the invalid consumption of the electricity without charging requirement, taking full use of the photovoltaic electric energy, and improving the availability of the photovoltaic electric energy. In addition, there is no influence on meeting the charging requirement.

When there is a charging requirement, if the photovoltaic electric energy at current moment can meet the charging requirement, it can be directly used for charging, and the remaining photovoltaic electric energy can be stored and/or introduced in the power grid, so that it can meet the charging requirement and further improve the availability of the photovoltaic electric energy when the photovoltaic electric energy is sufficient. When the photovoltaic electric energy at current moment cannot satisfy the charging requirement, a combination of battery and/or the power grid can be used to meet the charging requirement, so as to ensure the charging requirement of the vehicles when the photovoltaic electric energy is insufficient.

Further, when the photovoltaic electric energy is sufficient, the processing method of the remaining photovoltaic electric energy is determined by considering the power grid electricity price. If the power grid electricity price at current moment is relatively low, the remaining photovoltaic electric energy can be stored in the battery. If the electricity still remains after the battery storage capacity reached a target value, it can be connected to the power grid. If the power grid electricity price at current moment is relatively high, the remaining photovoltaic electric energy is preferentially connected to the power grid. The power supply strategy is adjusted according to the power grid electricity price, so as to ensure the full use of the remaining photovoltaic electric energy, improve the value of the remaining photovoltaic electric energy and increasing the benefits.

Based on the above technical solution, if the charging requirement is relatively low at current, and the battery power is sufficient, the battery electricity can be transmitted to the power grid, improving the value of the battery electricity, and increasing the benefits.

In addition, the photovoltaic conversion rate at current moment should also be considered by determining whether the photovoltaic electric energy is connected to the power grid or stored in the battery. If the photovoltaic conversion rate at current moment is relatively high, it is preferential to adjust the electricity according to the power grid parameters and transmit to a power grid. If the photovoltaic conversion rate at current moment is relatively low, it is preferential to store the photovoltaic electric energy in the battery. Under the condition of a low photovoltaic conversion rate, the supplementary effect on power grid is not obvious if the photovoltaic electric energy is connected to the power grid. The electricity can be chosen to be stored, solving the problem that the electricity cannot meet the charging requirement due to a low photovoltaic conversion rate.

Accordingly, if there is no charging requirement at current moment, the power supply strategy can be adjusted according to the power grid electricity price at current moment. If the power grid electricity price at current moment is relatively low, the photovoltaic electric energy can be preferentially stored in the battery. If the power grid electricity price at current moment is relatively high, the photovoltaic electric energy is preferentially adjusted according to the power grid parameters and connected to the power grid, so as to ensure the full use of the photovoltaic electric energy, improve the value of the photovoltaic electric energy and increasing the benefits.

When connecting the photovoltaic electric energy to the power grid, commercial power consumption at current moment is obtained. If the commercial power consumption is relatively high, the photovoltaic electric energy can be directly adjusted according to the commercial power parameters to serve as commercial power, so that the photovoltaic electric energy can be directly supplemented to the area with high power consumption, reducing the power supply pressure of the power grid.

In addition, if the power grid is out of electricity, the photovoltaic electric energy can be adjusted in the present application, so as to start the charging pile, and charge the vehicles through the charging pile. In sudden case of power failure in the power grid, this method can solve the problem that the vehicle cannot be charged, so as to meet the charging requirement of the vehicles.

### BRIEF DESCRIPTION OF THE DRAWINGS

In order to describe the technical solutions in the embodiments of the present application or in the existing technology more clearly, the drawings used in the description of the embodiments or the existing technology will be briefly introduced below. It is obvious that, the drawings in the following description are some embodiments of the present application. Those skilled in the art can also obtain other drawings based on these drawings without paying creative labor.
FIG. 1 is a schematic diagram of an application scenario provided in an embodiment of the present application.
FIG. 2 is a flow chat diagram of a charging method provided in an embodiment of the present application.
FIG. 3 is a flow chat diagram of another charging method provided in an embodiment of the present application.
FIG. 4 is a schematic diagram of a power supply strategy provided in an embodiment of the present application.
FIG. 5 is a schematic diagram of another power supply strategy provided in an embodiment of the present application.
FIG. 6 is a schematic diagram of another power supply strategy provided in an embodiment of the present application.
FIG. 7 is a schematic diagram of another power supply strategy provided in an embodiment of the present application.
FIG. 8 is a schematic diagram of another power supply strategy provided in an embodiment of the present application.
FIG. 9 is a structural schematic diagram of a charging apparatus provided in an embodiment of the present application.
FIG. 10 is a structural schematic diagram of a charging apparatus provided in an embodiment of the present application.
FIG. 11 is a structural schematic diagram of an electronic device provided in an embodiment of the present application.

### DETAILED DESCRIPTION

In order to make the purposes, technical solutions and advantages of the embodiments of the present application clearer, the technical solutions in the embodiments of the present application will be clearly and completely described below in combination with the drawings in the embodiments of the present application. It is obvious that, the described embodiments are part of the embodiments of the present application, rather than all embodiments. All the other embodiments obtained based on the embodiments in the present application by those skilled in the art without creative labor belong to the protection scope of the present application.

In addition, the term "and/or" in the present application, is only a kind of association relationship describing association objects, which means there are three relationships. For example, A and/or B can represent three situations: A existing alone, A and B both existing, and B existing alone. Further, the character "/" generally indicates that the previous and posterior associated objects are in an "OR" relationship without specific explanation.

The present application is further described in detail below in combination with drawings.

The electric vehicles consume electrical energy, and it is extremely slow to charge the electric vehicle using household alternating current. It takes several hours to fully charge the vehicles, which is time consumed. Therefore, many operators establish charging fields, and provide charging piles for realizing a fast direct current charging for vehicles, extremely reducing the charging time.

Generally, the charging field adopts the power grid as the energy source. However, the power grid power supply is not stable in some areas, so that the energy source of the charging field will be influenced. Therefore, some charging fields will adopt photovoltaic as the energy source in addition to the power grid.

In the scenario of using photovoltaic electric energy as the energy source, photovoltaic electric energy is generally directly used for charging the vehicles. When there is no charging requirement or there is a low charging requirement, a part of photovoltaic energy will leave unused and be wasted, resulting in a low availability of the photovoltaic electric energy.

Based on the above, the present application provides a charging method, a charging apparatus, electronic device and a computer program product. The power supply strategy of the photovoltaic electric energy can be adjusted in combination with the power requirement, taking full use of the photovoltaic electric energy and improving availability of the photovoltaic electric energy. In addition, the photovoltaic electric energy can be adjusted according to the power grid parameters and connected to the power grid, reducing the power supply pressure of the power grid.

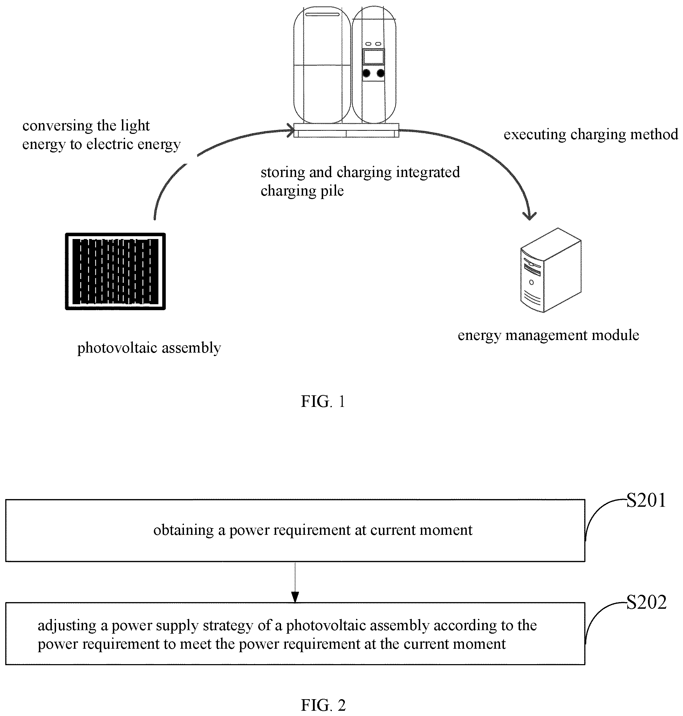

FIG. 1 is a schematic diagram of an application scenario provided in the present application. The energy management module and photovoltaic assembly are integrated in the storing and charging integrated charging pile. The photovoltaic assembly can obtain the light energy and convert it into photovoltaic electric energy. The energy management module can execute the charging method provided in the present application and adjust the power supply strategy of the photovoltaic electric energy in combination with the power requirement. The photovoltaic electric energy is used for vehicle charging, power grid power supply and battery energy storage according to different power requirements. The detail implementation method can refer to the following embodiments.

FIG. 2 is a flow chat diagram of a charging method provided in an embodiment of the present application. The method in the embodiment can be applied in the storing and charging integrated charging pile in the above scenario, or other equipment management of the charging piles in the other scenario. As shown in FIG. 2, the method includes:
Step S201, obtaining a power requirement at current moment.

The power requirement refers to the requirement for electricity of the power consumption objects. The power consumption objects can be vehicles, batteries, power grids, etc. Correspondingly, the power requirement of the vehicle is a charging requirement, the power requirement of the battery is an energy storing requirement, and the power requirement of the power grid is a grid connection requirement. The requirement can include the corresponding power consumption.

In some embodiments, the specific power requirement can be determined by connecting and information transmitting with each power consumption object. For example, the charging requirement of the vehicles can be determined by detecting whether there is a vehicle connected to the charging interface of the charging pile. The storing requirement can be determined by detecting the state of battery. The grid connection requirement can be determined by detecting the power consumption of the power grid.

In the other embodiments, the specific power requirement can be also determined by the data analysis. For example, the charging requirement of the vehicles can be determined by analyzing whether there is a vehicle waiting near the charging pile. The charging requirement of the vehicles can be also determined by statistically analyzing the historical charging data of the charging pile. The storing requirement can be determined by statistically analyzing the historical storing data, and the grid connection requirement can be determined by statistically analyzing the historical power consumption of the power grid.

Step S220, adjusting a power supply strategy of a photovoltaic assembly according to the power requirement to meet the power requirement at current moment.

The power supply strategy of the photovoltaic assembly is the power supply purpose of the photovoltaic electric energy. The power supply manner of the photovoltaic electric energy can be adjusted corresponding to the determined power requirement at current moment in step S201, so as to satisfy the power requirement at current moment.

Specifically, the power consumption parameter at current moment can be matched by changing the photovoltaic electric energy parameters generated by the photovoltaic assembly (such as voltage, frequency and so on), and the electricity can be supplied to the power consumption object.

In some embodiments, the power supply strategy can be optimized and executed in combination with the battery and the power grid according to the detail situations of the power requirement.

The power supply method provided in the present application obtains the power requirement at current moment and adjusts the power supply strategy of the photovoltaic assembly according to the power requirement to meet the power requirement at current moment. Therefore, the power supply strategy of the photovoltaic assembly can be flexibly adjusted, taking full use of the photovoltaic electric energy generated by the photovoltaic assembly, reducing the idle of the photovoltaic electric energy, reducing the energy waste, and meeting the power requirement at different times.

In some embodiments, the power supply strategy of the photovoltaic electric energy is adjusted by determining whether there is a charging requirement at current moment, including determining whether there is a charging requirement in the power requirement at current moment, if there is a charging requirement at current moment, charging the vehicle with a photovoltaic electric energy; if not, storing the photovoltaic electric energy in a battery and/or adjusting the photovoltaic electric energy according to power grid parameters and transmitting to a power grid.

Specifically, the photovoltaic electric energy is mainly used for charging the vehicles in the present application. Therefore, the charging requirement is firstly taken into consideration when determining the power requirement. If there is a charging requirement, the vehicles are preferentially charged. If there is no charging requirement, the photovoltaic electric energy can be stored in the battery, and/or the photovoltaic electric energy can be adjusted by the grid on-off inverter according to the power grid parameters to convert to the electricity that can be used in the power grid, so as to realize the grid connection.

The connection state of the charging interface corresponding to the charging pile can be detected by the method in step S201. If the corresponding charging interface is connected, it can be determined that there is a charging requirement in the current charging pile. If all the corresponding charging interfaces are not connected, it means that no vehicle is connected to the charging pile for charging at the current moment, that is, there is no charging requirement.

In some implementations, it can also detect whether the corresponding charging pile has current output. If there is current output, it indicates that the corresponding charging pile may charge the vehicle. If there is no current output, the corresponding charging pile may leave unused. Correspondingly, if all charging piles in the charging field have no current output, it can be considered that there is no charging requirement at current moment.

The use of the photovoltaic electric energy at current moment can be determined by determining the charging requirement at current moment in the embodiment. When it is determined that there is a charging requirement at current moment, the photovoltaic electric energy is preferentially used for charging the vehicles to ensure the basic charging requirement. If there is no charging requirement, the photovoltaic electric energy can be stored in the battery and/or incorporated into the power grid for use, reducing the invalid consumption of electricity without charge requirement, taking full use of the photovoltaic electric energy generated by photovoltaic assembly, and improving the availability of photovoltaic electric energy. In addition, there is no influence on the charging requirement.

In some embodiments, the power supply strategy can be further adjusted by determining the volume of the photovoltaic electric energy. Specifically, it is determined whether the photovoltaic electric energy is higher than a preset electric energy threshold value. If the photovoltaic electric energy is higher than the preset electric energy threshold value, the vehicles are charged by using the photovoltaic electric energy, the remaining photovoltaic electric energy is stored in the battery, and/or, the remaining photovoltaic electric energy is adjusted according to power grid parameters and incorporated in the power grid. If the photovoltaic electric energy is lower than the preset electric energy threshold value, the vehicles are charged by using the photovoltaic electric energy, battery and/or power grid.

The consumed photovoltaic electric energy that can meet the charging requirement in each period can be obtained from the analysis by obtaining the charging requirement in a period of time (such as one year, one quarter, one month or one week). The consumed photovoltaic electric energy that can meet the charging requirement in each period can be set as the corresponding preset electric energy threshold value in this period. An average consumed photovoltaic electric energy that can meet the charging requirement in this period can also be calculated, and the average consumed photovoltaic electric energy can be set as the corresponding preset electric energy threshold value in this period.

The photovoltaic electric energy at current moment is compared with the preset electric energy threshold value in the corresponding period. If the photovoltaic electric energy at current moment is higher than the preset electric energy threshold value, it indicates that the photovoltaic electric energy generated at current moment can satisfy the charging requirement at current moment, and it is remained. The electricity required by vehicle charging is output to the vehicles to be charged at current moment, and the remaining photovoltaic electric energy is stored in the battery, and/or, the remaining photovoltaic electric energy is adjusted by grid on-off inverter according to power grid parameters and is incorporated to the grid connection.

Accordingly, if the photovoltaic electric energy at current moment is lower than the preset electric energy threshold value, it indicates that the photovoltaic electric energy generated at current moment cannot satisfy the charging requirement at current moment. At this time, it requires the electricity of the battery, and/or the power grid, so as to meet the charging requirement at current moment.

It should be noted that, if the photovoltaic electric energy cannot satisfy the charging requirement at current moment, then it is determined whether the electricity of the battery can provide sufficient electricity to meet the charging requirement at current moment. If it can satisfy the requirement, the battery is preferentially to be used in combination with the photovoltaic electric energy to charge the vehicles. If the battery electricity in combination with the photovoltaic electric energy still cannot meet the charging requirement at current moment, the power grid is used to charge the vehicles. The execution sequence can minimize the occupation of the power grid, reduce the power supply pressure of the power grid, and reduce operating costs.

The power supply strategy of the photovoltaic electric energy at current moment can be determined by the electricity required by the charging requirement at current moment when there is a charging requirement in the embodiment. If the photovoltaic electric energy at current moment is sufficient, then the photovoltaic electric energy can be used to charge the vehicles. The remaining photovoltaic electric energy can even be stored and/or incorporated in the power grid, so that the availability of the photovoltaic electric energy can be further improved when the photovoltaic electric energy is sufficient and meets the charging requirement. If the photovoltaic electric energy at current moment is insufficient, the battery and/or the power grid can be used in combination with the photovoltaic electric energy to provide power for the vehicles to meet the charging requirement. It can ensure that the battery electricity or the power grid can be supplemented when the photovoltaic electric energy is insufficient in this manner.

In some embodiments, the step of charging the vehicle with the photovoltaic electric energy, storing the remaining photovoltaic electric energy in the battery, and/or, adjusting the remaining photovoltaic electric energy according to power grid parameters and transmitting to a power grid if the photovoltaic electric energy is higher than the electricity threshold value specifically includes: when the photovoltaic electric energy is higher than the electricity threshold value, obtaining a power grid electricity price at current moment, if the power grid electricity price is lower than the electricity price threshold value, charging the vehicle with the photovoltaic electric energy, and storing the remaining photovoltaic electric energy in the battery; if the power grid electricity price is higher than the electricity price threshold value, charging the vehicle with the photovoltaic electric energy, and adjusting the remaining photovoltaic electric energy according to power grid parameters and transmitting to a power grid.

The power grid electricity price can be obtained by analyzing after connecting to the power grid platform. Specifically, the power grid electricity price in this period can be analyzed by obtaining the power grid electricity price in last period to determine an average value of the power grid electricity price. And the average value of the power grid electricity price is set as the preset electricity price threshold value. Alternatively, each power price of the local power grid can be obtained and sequenced, and the middle price is set as the preset electricity price threshold value.

The power grid electricity price at current moment can be obtained when the photovoltaic electric energy is higher than the preset electric energy threshold value in corresponding period in the above embodiments. The power grid electricity price is compared with the preset electricity price threshold value. If the power grid electricity price at current moment is lower than the preset electricity price threshold value, it indicates that the power grid electricity price is relatively low. The benefits obtained from adjusting the electricity according to the power grid parameters and transmitting to a power grid is relatively low at this time. Therefore, the photovoltaic electric energy is preferentially to be used to charge the vehicles, and the remaining photovoltaic electric energy is stored in the battery. If the power grid electricity price at current moment is higher than the preset electricity price threshold value, it indicates that the power grid electricity price is relatively high. The benefits obtained from adjusting the electricity according to the power grid parameters and transmitting to a power grid is relatively high at this time. Therefore, the photovoltaic electric energy is preferentially to be used to charge the vehicles, and the remaining photovoltaic electric energy is adjusted according to the power grid parameters and is incorporated in the power grid.

In the embodiment, the processing manner of the remaining photovoltaic electric energy when the photovoltaic electric energy is sufficient can be determined by considering the power grid electricity price. If the power grid electricity price is relatively low at current moment, the remaining photovoltaic electric energy can be preferentially stored in the battery. If the electricity still remains after the battery storage electricity reaches the target value, it can be incorporated in the power grid. When the power grid electricity price is relatively high at current moment, the remaining photovoltaic electric energy is preferentially incorporated in the power grid. The power supply strategy can be adjusted according to the power grid electricity price, ensuring the fully use of the remaining photovoltaic electric energy, improving the value of the remaining photovoltaic electric energy and increasing the benefits.

In some embodiments, if the charging requirement is low at current moment, and the battery electricity is sufficient, the battery electricity can be transmitted to the power grid. Specifically, the above method of charging the vehicles using the photovoltaic electric energy further includes: determining whether the charging requirement at current moment is lower than a preset requirement threshold value, and whether a battery power is higher than a preset power threshold value, if the charging requirement at current moment is lower than the preset requirement threshold value and the battery power is higher than the preset power threshold value, transmitting the battery to the power grid.

The energy management module can detect whether the charging interface corresponding to each charging pile is connected. The amount of the vehicles with charging requirements at current moment can be determined by the amount of the connected charging piles. When the amount of the connect charging piles is relatively small at current, for example, a half of the charging piles are not connected, it indicates that the charging requirement at current moment is lower than the preset requirement threshold value, that is, the charging requirement is low.

The sufficient electricity of the battery can be understood as a high ratio of the remaining electricity to the total battery power, which is enough to meet the charging requirement of a few vehicles. Accordingly, the preset power threshold value can be set as a certain ratio of the total battery power, such as 80%-100% of the total battery power. This is one of the setting manners, it can be set according to the detail local power consumption, and the operator can set the value according to the operation condition of the charging field, which is not limited in the embodiment.

In detail, when the photovoltaic electric energy at current moment is higher than the preset electric energy threshold value, the charging requirement is relatively low at current moment, and the battery power reaches the preset power threshold value, the electricity of the battery can be adjusted correspondingly and transmitted to the power grid. Whether the battery electricity is transmitted to the power grid after corresponding adjustment is determined by other factors at current moment, such as the power grid electricity price. If the power grid electricity price at current moment is higher than the above preset electricity price threshold value, it indicates that the remaining electricity can obtain larger benefit when being adjusted and transmitted to the power grid. In this situation, when the photovoltaic electric energy at current moment is higher than the preset electric energy threshold value, the charging requirement is relatively low at current moment, and the battery power reaches the preset power threshold value, the electricity of the battery can be adjusted correspondingly and transmitted to the power grid. Accordingly, in some implementations, stages of the charging requirement can be set. For example, it indicates that the charging requirement is extremely low when detecting that there are not less than five vehicles to be charged. At this time, if the photovoltaic electric energy at current moment is higher than the preset electric energy threshold value, and the battery power reaches the preset power threshold value, although the power grid electricity price is relatively low, the electricity of the battery can be adjusted correspondingly and transmitted to the power grid in the situation of the extremely low charging requirement.

The embodiment is based on the above technical solution. When the charging requirement at current is relatively low, and the battery power is sufficient, the battery electricity can be transmitted to the power grid, improving the value of the battery electricity and further increasing the benefits.

In some embodiments, the above step of storing the photovoltaic electric energy in the battery, and/or, adjusting the photovoltaic electric energy according to power grid parameters and transmitting to a power grid specifically includes: determining a photovoltaic conversion rate at current moment; if the photovoltaic conversion rate at current moment is higher than a preset conversion threshold value, adjusting the photovoltaic electric energy according to power grid parameters and transmitting to a power grid; if the photovoltaic conversion rate at current moment is lower than the preset conversion threshold value, storing the photovoltaic electric energy in the battery.

The photovoltaic conversion rate is influenced by many factors. For example, the angel of the photovoltaic assembly may influence the obtainment of the light by the photovoltaic assembly, so as to influence the photovoltaic conversion rate. The aging of the internal structure of the photovoltaic assembly can also influence the photovoltaic conversion rate. The weather factor influence the light to further influence the photovoltaic conversion rate. The time also influences the photovoltaic conversion rate. Due to the influences by different factors, the photovoltaic conversion rate may change at any time.

In some embodiments, the consumed energy when incorporating the photovoltaic electric energy to the power grid can be determined according to the hardware condition of the charging piles. The consumed energy is corresponding to a lowest photovoltaic conversion rate based on the size of the corresponding photovoltaic assembly. The lowest photovoltaic conversion rate can be set as the preset conversion threshold value. When the photovoltaic conversion rate is larger than the preset conversion threshold value, the generated photovoltaic electric energy can counteract the consumed energy during grid connection.

If there is no charging requirement at current moment, the photovoltaic conversion rate at current moment can be compared with the preset conversion threshold value. When the photovoltaic conversion rate at current moment is higher than the preset conversion threshold value, it indicates that the generated photovoltaic electric energy can counteract the consumed energy during grid connection and the grid connection can be performed to release the power supply pressure of the power grid. At this time, the photovoltaic electric energy is preferentially adjusted according to the power grid parameters and incorporated to the power grid. If the photovoltaic conversion rate at current moment is lower than the preset conversion threshold value, it indicates that the generated photovoltaic electric energy cannot counteract the consumed energy during grid connection, which cannot release the power supply pressure of the power grid. At this time, the photovoltaic electric energy is preferentially stored in the battery.

In some embodiments, the lowest photovoltaic electric energy required in the corresponding period can be determined according to the charging requirement in the historical period. The required lowest photovoltaic electric energy is corresponding to a lowest photovoltaic conversion rate based on the size of the corresponding photovoltaic assembly. The lowest photovoltaic conversion rate can be set as the preset conversion threshold value. When the photovoltaic conversion rate is larger than or equal to the preset conversion threshold value, it can meet the charging requirement in the corresponding period.

When there is a charging requirement, the preset conversion threshold value obtained by the above method is compared with the photovoltaic conversion rate at current moment. When the photovoltaic conversion rate at current moment is higher than the preset conversion threshold value, it indicates that the photovoltaic electric energy generated in the photovoltaic conversion rate at current moment can meet the charging requirement at current moment, and the photovoltaic electric energy remains. At this time, the photovoltaic electric energy can be used to charge the vehicles, and the remaining photovoltaic electric energy can be adjusted by the grid on-off inverter according to the power grid parameters and incorporated in the power grid. When the photovoltaic conversion rate at current moment is lower than the preset conversion threshold value, it indicates that the photovoltaic conversion rate at current moment cannot meet the current charging requirement. The electricity of the battery is required to be used and/or the power grid is combined to meet the charging requirements of all vehicles at current moment.

In some application scenarios, the energy management module can speculate the photovoltaic conversion rates under the influence of different weathers according to the weathers in the historical period and the corresponding average daily photovoltaic conversion rate. The weather in a future period is obtained to compare with the weather conditions in the historical period. If there is a matched weather condition, it can preliminarily determine that the photovoltaic conversion rate under the matched weather condition is the same. The power supply strategy can be preliminarily determined in the time with the same photovoltaic conversion rate in the further. For example, it is a rainy weather on September 8, 2022, the daily average photovoltaic conversion rate is 46.3%, and the power supply strategy of the photovoltaic electric energy on that day is only for charging the vehicles. If it is a rainy weather on October 15, 2022, the average photovoltaic conversion rate is preliminary determined as 46.3%, the power supply strategy on September 8 can be determined as the power supply strategy on October 15, only for charging the vehicles rather than storing in the battery or being adjusted by the grid on-off inverter according to the power grid parameters and performing the grid connection.

In some other application scenarios, the energy management module can obtain the photovoltaic conversion rates in different periods and obtain the average photovoltaic conversion rate of each period according to the photovoltaic conversion rates in different periods in one month or one week. Accordingly, the photovoltaic conversion rate in a corresponding future period can be preliminarily speculated using the corresponding average photovoltaic conversion rate in each period, and the power supply strategy in the future period can be determined according to the average photovoltaic conversion rate.

In the embodiment, whether the photovoltaic electric energy is incorporated in the power grid or stored in the battery can be determined in combination with the photovoltaic conversion rate at current moment. When the photovoltaic conversion rate at current moment is relatively high, the photovoltaic electric energy can be preferentially adjusted according to power grid parameters and incorporated in the power grid. When the photovoltaic conversion rate at current moment is relatively low, the photovoltaic electric energy can be preferentially stored in the battery. Under the condition of a low photovoltaic conversion rate, if the photovoltaic electric energy is incorporated in the power grid, the supplement effect on the power grid is not obvious, so that it can choose to store the photovoltaic electric energy, solving the problem of unable to meet the charging requirement due to the low photovoltaic conversion rate.

In some embodiments, the step of storing the photovoltaic electric energy in a battery and/or adjusting the photovoltaic electric energy according to power grid parameters and transmitting to a power grid if there is no charging requirement at current moment specifically includes: when there is no charging requirement at current moment, obtaining a power grid electricity price at current moment; if the power grid electricity price is lower than a preset electricity price threshold value, storing the photovoltaic electric energy in the battery, and adjusting the remaining photovoltaic electric energy according to power grid parameters and transmitting to a power grid; if the power grid electricity price is higher than the preset electricity price threshold value, charging the vehicle with the photovoltaic electric energy, and adjusting the photovoltaic electric energy according to power grid parameters and transmitting to a power grid.

Specifically, when it is determined that there is no charging requirement at current moment according to the above embodiments, the power grid electricity price is obtained. The power grid electricity price at current moment is compared with the corresponding preset electric energy threshold value, in which the corresponding preset electric energy threshold value in each period is obtained in the above embodiment. If the power grid electricity price is lower than the preset electricity price threshold value, it indicates that the current electricity price is relatively low. The photovoltaic electric energy is stored in the battery, and the remaining photovoltaic electric energy is adjusted by the grid on-off inverter according to power grid parameters and incorporated in the power grid at this time. If the power grid electricity price is higher than the preset electricity price threshold value, it indicates that the current electricity price is relatively high. The photovoltaic electric energy is adjusted by the grid on-off inverter according to power grid parameters and incorporated in the power grid at this time.

Certainly, when it is determined that the photovoltaic conversion rate is high, whether the photovoltaic electric energy is incorporated in the power grid or stored in the battery can be determined in combination with the power grid electricity price at current moment. When the power grid electricity price is relatively low, the photovoltaic electric energy is preferentially stored in the battery after adjustment, and the remaining photovoltaic electric energy can be adjusted by the grid on-off inverter according to the power grid parameters and incorporated in the power grid. When the power grid electricity price is relatively high, the photovoltaic electric energy is adjusted by the grid on-off inverter according to the power grid parameters and incorporated in the power grid.

When there is no charging requirement in the embodiment, the power supply strategy can be adjusted according to the power grid electricity price at current moment. When the power grid electricity price is relatively low, the photovoltaic electric energy is preferentially stored in the battery. When the power grid electricity price is relatively high, the photovoltaic electric energy is preferentially adjusted according to the power grid parameters and incorporated in the power grid, which ensures the fully use of the photovoltaic electric energy, improves the value of the photovoltaic electric energy and increases the benefits. The benefits generated by the photovoltaic electric energy can be operated to reduce the cost.

In some embodiments, the step of adjusting the photovoltaic electric energy according to power grid parameters and transmitting to a power grid specifically includes: obtaining a commercial power consumption at current moment, if the commercial power consumption is higher than a preset power consumption threshold value, adjusting the photovoltaic electric energy according to commercial power parameters to serve as the commercial power.

The daily average commercial power consumption is obtained according to the commercial power consumption in a period. The daily average commercial power consumption is set as the preset power consumption threshold value.

The commercial power consumption at current moment is obtained and compared with the presser power consumption threshold value. When the commercial power consumption at current moment is higher than the preset power consumption threshold value, it indicates that the commercial power consumption at current moment is relatively high, and the power grid is under pressure. At this time, the photovoltaic electric energy is adjusted by the grid on-off inverter according to commercial power parameters to serve as the commercial power.

When the photovoltaic electric energy is incorporated in the power grid in the embodiment, the commercial power consumption at current. moment is obtained. When the commercial power consumption is high, the photovoltaic electric energy can be directly adjusted according to the commercial power parameters to serve as the commercial power, so that the photovoltaic electric energy can be directly supplemented to the area with higher power consumption to reduce the power supply pressure of the power grid.

In some embodiments, the step of starting the charging pile after adjusting the photovoltaic electric energy when the power gird is out of power specifically includes: determining whether the power grid is energized at current moment, if the power grid is out of electricity, starting a charging pile by using the photovoltaic electric energy, and charging the vehicles through the charging pile.

When the power grid at current moment cannot provide electricity to ensure the normal operation of the charging field, the energy management module can adjust the photovoltaic electric energy by the grid on-off inverter according to commercial power parameters for charging the charging piles, the remaining photovoltaic electric energy is preferentially used for charging the vehicles when there is a charging requirement.

With the above manner in the embodiment, it can ensure that the photovoltaic electric energy is adjusted under the condition that the power grid is out of power, so as to start the charging pile, and the vehicles are charged by the charging piles. In case of sudden power failure of the power grid, this method can solve the problem of charging the vehicles, ensuring meeting the charging requirement of the vehicles.

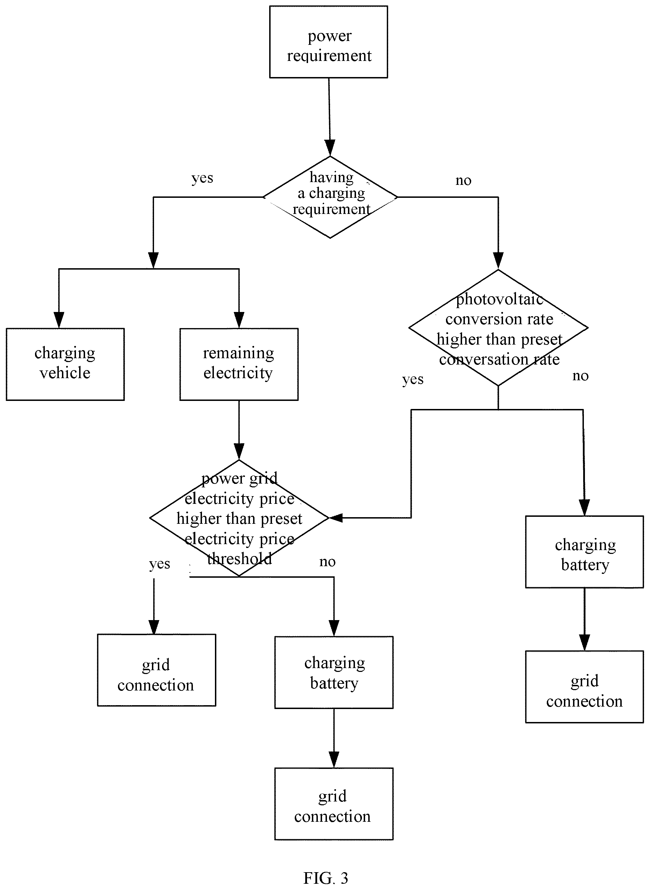

In some embodiments, the power requirement at current moment is obtained. When there is a charging requirement in the power requirement at current moment, the photovoltaic electric energy generated by the photovoltaic assembly is preferentially used for charging the vehicles, then is determined to charge the battery and or be incorporated in the power grid according to the power grid electricity price. When there is no charging requirement at current moment, the photovoltaic electric energy generated by the photovoltaic assembly is adjusted according to the photovoltaic conversion rate to charge the battery and/or be incorporated in the power grid, as shown in FIG.3.

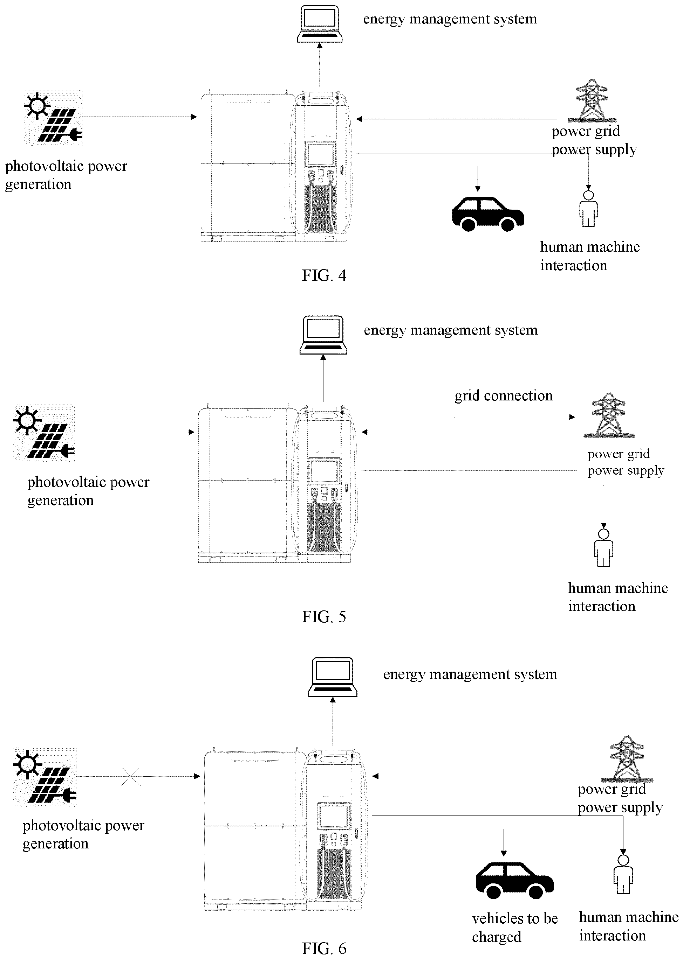

A lithium battery, a battery management system, a grid on-off inverter, and a photovoltaic assembly are integrated in the storing and charging integrated charging pile, which can automatically switch to different using modes in different application scenarios, ensuring meeting the charging requirement for the terminal user, optimizing the cost structure of the operators' customers, optimizing the loading situation of the power grid, realizing the intelligent energy use and management by using the new energy.
1. When the power grid is energized and photovoltaic electric energy is available, the photovoltaic electric energy is preferentially used to charge the vehicles by the inverter. When no vehicle is charged, the photovoltaic electric energy is stored in the battery. If the photovoltaic electric energy cannot meet the vehicle requirements, the photovoltaic electric energy and the battery can be combined to charge the vehicles. As shown in FIG.4, the electricity provided by the power grid and the electricity generated by the photovoltaic assembly are used to charge the vehicles through the charging piles by the energy management system (energy management module), and are also used for human machine interaction.
2. When the power grid is energized and photovoltaic electric energy is available, if there is no charging requirement for the vehicles and the power grid has the grid connection requirement, the photovoltaic electric energy can be matched with the voltage and the frequency of the power grid by the inverter integrated in the charging pile, be automatically adjusted to the alternating current in accord with the power grid parameters, and provide power for power grid, so as to realize the use of the photovoltaic energy, and realize the purpose of supplementing the energy for the power grid during the high load period of the power grid. As shown in FIG. 5, the electricity provided by the power grid and the electricity generated by the photovoltaic assembly are used to charge the vehicles through the charging piles by the energy management system (energy management module), and are also used for human machine interaction. When there is a grid connection requirement for the power grid, the electricity generated by the photovoltaic assembly can be adjusted according to the power grid parameters and incorporated in the power grid.

Strategy 1, the current local weather and time (at night) or detecting the photovoltaic conversion rate can be taken into consideration. If it is a terrible weather or has a low photovoltaic conversion rate, it doesn't have to provide power for the power grid.

Strategy 2, the charging requirement in each period can be determined according to the historical situations of the local vehicle charging, and the amount and working time of surrounding residents. The power supply strategy of the energy storage equipment and the external grid can be adjusted according to the requirement. For example, the next few hours will be the trough period for vehicle charging, a part of the photovoltaic electric energy can be stored for providing power for the energy storage equipment, and a part be provided to the power grid, rather than being provided to the power grid after fully charging of the energy storage equipment. If the energy storage equipment has sufficient power, the electricity can be provided to the power grid.

Strategy 3, the energy storage equipment can be charged in the period with a relatively low power grid electricity price, and provides power for the power grid in the period with a relatively high power grid electricity price.

Strategy 4, the charging electricity of the photovoltaic electric energy is speculated in combination with the weather in a future period (several hours or one day). If it is a bad weather, the electricity of photovoltaic charging is relatively low, the energy storage can reduce the power supply to the power grid.

The above strategies can be combined. In combination with the commercial power consumption and office building power consumption situations, the photovoltaic electric energy provides power for the alternating equipment in the commercial building in the peak power consumption period, reducing the pressure of the power grid.

3. When the power grid is energized and photovoltaic electric energy is unavailable, the battery and the power grid are used for charging the vehicles. When no vehicle is charged, the power grid can charge the battery for ensuring the battery power. In this stage, the deployment strategy of the battery and the power grid are balanced in different periods according to the customized power distribution mode. The different strategies will determine the current operation state of the battery and the power distribution logic based on the power grid electricity price, the battery power, the vehicle requirement power, the grid-tie grid-off requirement, the power generation of the photovoltaic assembly and so on. The strategy modes are respectively MAX mode, ECO mode and AUTO mode. As shown in FIG.6, when the photovoltaic electric energy is unavailable, the energy management system (energy management module) mainly uses the power grid to charging the vehicles through the charging piles, and are also used for human machine interaction.
a) The MAX mode takes the vehicle requirement power as the first priority, the charging and the supplement are performed at any time. The charging piles will provide the maximal power thereof for the vehicle when the vehicle needs to be charged. When no vehicle is charged, the battery will be supplemented until the next vehicle is connected.
b) The ECO mode takes the operator cost as the highest priority. The platform can issue a two-stage tariff setting to the pile terminal. The pile terminal controller controls the output power of the charging pile in accord with the vehicle requirement in the early stage of the low-price period. When the storage capacity reduces to 50%, the energy storage equipment stops providing power for the vehicles. When there is an idle ACDC (alternating current-direct current) module, the electricity is supplemented to the energy storage equipment. In the later stage of the low-price period, one module should be reserved for charging the energy storage equipment, ensuring that the storage capacity reaches 100% before switching to the high-price period. In addition, one ACDC module is reserved for charging the vehicles without influence on the electricity supplement of the energy storage equipment. The charging piles preferentially adopt the output power of the energy storage equipment according to the required power of the vehicles in the high-price period. When the capacity of the energy equipment is 50%, one module can be added for outputting power from the power grid if the output power of the energy storage equipment cannot meet the requirement of the vehicles. When the capacity of the energy equipment is lower than 50%, the electricity of the power grid can be output for charging the vehicles if necessary.
c) The AUTO mode can balance the cost of the operator and the power requirement of the vehicles. This mode is based on a three-stage tariff setting, intelligently deploying the charging modules to correspond to the power requirement of the vehicles. The pile terminal controller controls the output power of the charging pile in accord with the vehicle requirement in the early stage of the low-price period. When the storage capacity reduces to 50%, the energy storage equipment stops providing power for the vehicles. When there is an idle ACDC module, the electricity is supplemented to the energy storage equipment. In the later stage of the low-price period, one module should be reserved for charging the energy storage equipment, ensuring that the storage capacity reaches 100% before switching to the high-price period. In addition, one ACDC module is reserved for charging the vehicles without influence on the electricity supplement of the energy storage equipment. In the early stage of the middle-price period, when the capacity of the energy equipment is larger than 50%, the charging piles provide the maximal power for the vehicles by successively deploying the DCDC module (direct current-direct current) and the ACDC module according to the vehicle requirement. In this stage, the battery will not be recharged no matter whether the pile is idle. When the capacity of the energy equipment is lower than 50%, the energy storage system won't provide electricity for the vehicles, it only charges the vehicles by deploying the ACDC module. When there is an idle ACDC module, the battery is supplemented to a certain capacity. In the later stage of the middle-price period, the battery is allowable to be supplemented to a higher SOC (State of Charging). In the early stage of the high-price period, the energy storage equipment is preferentially used for charging the vehicles. When the capacity of the battery is too low, the electricity supplement is allowed. When the battery is out of power, the ACDC module is allowed for charging the vehicles. In the later stage of the high-price period, the electricity supplement is not allowable. The ACDC module is allowed for charging the vehicles only when the battery is out of power.

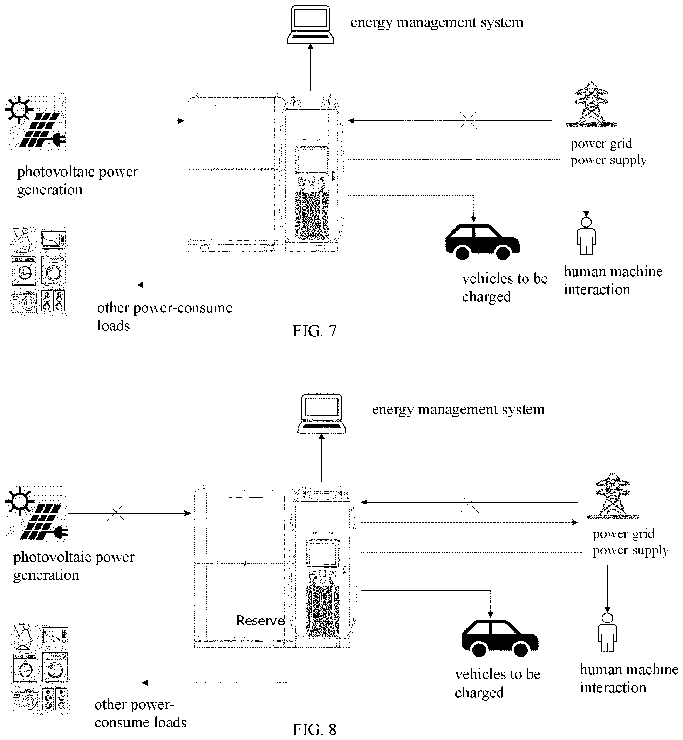

4. When the power grid is out of power and the photovoltaic electric energy is available, a backup mode is started. In one aspect, the photovoltaic electric energy provides power for the alternating load in the piles by conversing to the alternating current by the inverter, so as to ensure the normal operation of the piles. In another aspect, the photovoltaic electric energy can charge the vehicles. If the electricity remains, the photovoltaic electric energy can be used for charging the battery. If the photovoltaic electric energy alone cannot meet the vehicle requirement, the photovoltaic electric energy and the battery can provide power for vehicles at the same time. When the vehicles don't require the power supply, the photovoltaic electric energy can provide power for other power-consumed loads by the inverter. As shown in FIG.7. when the power grid cannot provide the power, the energy management system (energy management module) starts the backup mode, and used the electricity generated by the photovoltaic assembly to start the charging piles, so as to meet the charging requirement and realize the human machine interaction. In addition, when there is no charging requirement, the photovoltaic electric energy can provide power for other loads such as commercial buildings.

5. A part of the electricity can be reserved in the pile energy storage system (battery) in a Power Reserve mode. The charging piles can switch to a grid connection mode when required, in which the frequency of the power grid is balanced, the electricity is provided for the micro net in the zone, or the peak shaving and valley filling of the power grid is realized. The charging pile can switch to a grid off mode under a special situation. The reserved electricity can keep the operation state of the charging pile under a grid off situation. As shown in FIG.8, the battery set in the charging pile can charge the vehicle and realize the human machine interaction when the power grid cannot provide power and the photovoltaic assembly cannot generated the electricity. When there is no charging requirement, the photovoltaic electric energy can provide power for other loads.

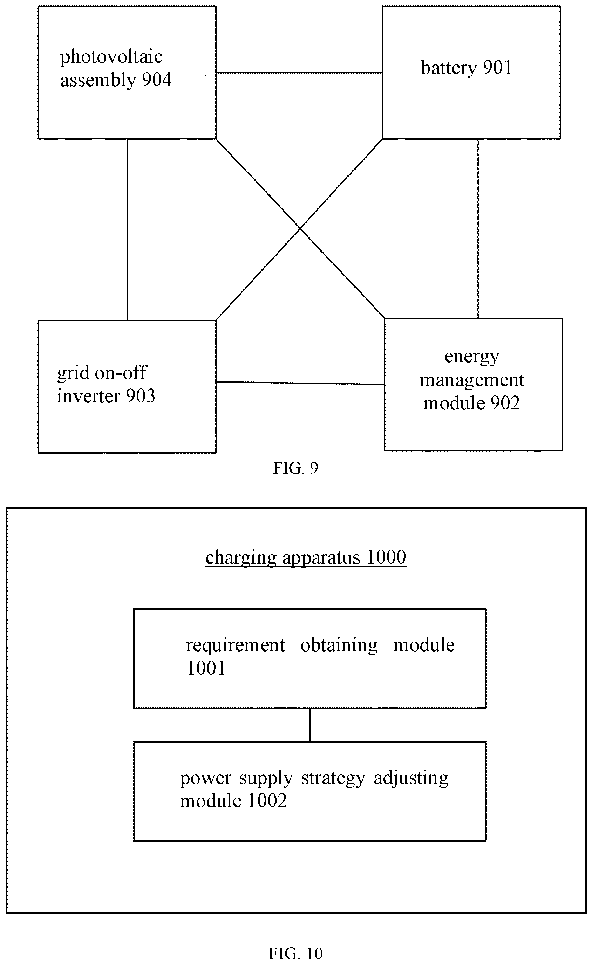

FIG.9 is a structural schematic diagram of a charging apparatus provided in an embodiment of the present application. As shown in FIG.9, the charging apparatus 900 in the embodiment includes a battery 901, an energy management module 902, a grid on-off inverter 903 and a photovoltaic assembly 904.

The photovoltaic assembly 904 is separately connected to the battery 901 and the grid on-off inverter 903, which is configured to convert light energy into photovoltaic electric energy, store the photovoltaic electric energy in the battery 901, and/or, to perform a conversion of the photovoltaic electric energy between an alternating current and a direct current by using the grid on-off inverter 903 to meet the power requirement at current moment.

The energy management module 902 is separately connected to the battery 901, the photovoltaic assembly 904 and the grid on-off inverter 903, which is configured to obtain the power requirement at current moment and adjust the power supply strategy of the photovoltaic assembly 904 according to the power requirement by using the battery 901 and the grid on-off inverter 903to meet the power requirement at current moment.

The battery 901 is connected to the grid on-off inverter 903, which is configured to adjust the battery 901 and transmit the battery electricity to the power grid according to the power requirement at current moment when the photovoltaic electric energy is higher than a preset electric energy threshold value.

The device in the embodiment can be configured to execute any above-mentioned method in the embodiments. The implementation principles and the technical effects thereof are similar, which won't be repeatedly described.

FIG. 10 is a structural schematic diagram of a charging apparatus provided in an embodiment of the present application. As shown in FIG. 10, the charging apparatus 1000 in the embodiment includes a requirement obtaining module 1001 and a power supply strategy adjusting module 1002.

The requirement obtaining module 1001 is configured to obtain the power requirement at current moment. The power supply strategy adjusting module 1002 is configured to adjust the power supply strategy of the photovoltaic assembly according to the power requirement to meet the power requirement at current moment.

Optionally, the power supply strategy adjusting module 1002 is configured to:
determine whether there is a charging requirement in the power requirement at current moment,
if there is a charging requirement at current moment, charge the vehicle with a photovoltaic electric energy;
if not, store the photovoltaic electric energy in a battery and/or adjust the photovoltaic electric energy according to power grid parameters and perform a grid connection.

Optionally, when charging the vehicle with the photovoltaic electric energy, the power supply strategy adjusting module 1002 is configured to:
determine whether the photovoltaic electric energy is higher than a preset electric energy threshold value,
if the photovoltaic electric energy is higher than the preset electric energy threshold value, charge the vehicle with the photovoltaic electric energy, store the remaining photovoltaic electric energy in the battery, and/or, adjust the remaining photovoltaic electric energy according to power grid parameters and perform a grid connection;
if the photovoltaic electric energy is lower than the preset electric energy threshold value, charge the vehicle with the photovoltaic electric energy, battery and/or power grid.

Optionally, when charging the vehicle with the photovoltaic electric energy, storing the remaining photovoltaic electric energy in the battery, and/or, adjusting the remaining photovoltaic electric energy according to power grid parameters and transmitting to a power grid if the photovoltaic electric energy is higher than the preset electric energy threshold value, the power supply strategy adjusting module 1002 is configured to:
when the photovoltaic electric energy is higher than the electricity threshold value, obtain a power grid electricity price at current moment;
if the power grid electricity price is lower than the electricity price threshold value, charge the vehicle with the photovoltaic electric energy, and store the remaining photovoltaic electric energy in the battery;
if the power grid electricity price is higher than the electricity price threshold value, charge the vehicle with the photovoltaic electric energy, and adjust the remaining photovoltaic electric energy according to power grid parameters and transmitting to a power grid.

Optionally, when charging the vehicle with the photovoltaic electric energy, the power supply strategy adjusting module 1002 is further configured to:
determine whether the charging requirement at current moment is lower than a preset requirement threshold value, and whether a battery power is higher than a preset power threshold value,
if the charging requirement at current moment is lower than the preset requirement threshold value and the battery power is higher than the preset power threshold value, transmit the battery to the power grid.

Optionally, when storing the photovoltaic electric energy in the battery, and/or, adjusting the photovoltaic electric energy according to power grid parameters and transmitting to a power grid, the power supply strategy adjusting module 1002 is configured to:
determine a photovoltaic conversion rate at current moment;
if the photovoltaic conversion rate at current moment is higher than a preset conversion threshold value, adjust the photovoltaic electric energy according to power grid parameters and perform a grid connection;
if the photovoltaic conversion rate at current moment is lower than the preset conversion threshold value, store the photovoltaic electric energy in the battery.

Optionally, when storing the photovoltaic electric energy in a battery and/or adjusting the photovoltaic electric energy according to power grid parameters and transmitting to a power grid if there is no charging requirement at current moment, the power supply strategy adjusting module 1002 is configured to:
when there is no charging requirement at current moment, obtain a power grid electricity price at current moment;
if the power grid electricity price is lower than a preset electricity price threshold value, store the photovoltaic electric energy in the battery, and adjust the remaining photovoltaic electric energy according to power grid parameters and transmitting to a power grid;
if the power grid electricity price is higher than the preset electricity price threshold value, charging the vehicle with the photovoltaic electric energy, and adjusting the photovoltaic electric energy according to power grid parameters and transmitting to a power grid.

Optionally, when adjusting the photovoltaic electric energy according to power grid parameters and transmitting to a power grid, the power supply strategy adjusting module 1002 is configured to:
obtain commercial power consumption at current moment,
if the commercial power consumption is higher than a preset power consumption threshold value, adjust the photovoltaic electric energy according to commercial power parameters to serve as the commercial power.

Optionally, when charging the vehicle with the photovoltaic electric energy, the power supply strategy adjusting module 1002 is configured to:
determine whether the power grid is energized at current moment,
if the power grid is out of electricity, start a charging pile by using the photovoltaic electric energy, and charge the vehicles through the charging pile.

The device in the embodiment can be configured to execute any above-mentioned method in the embodiments. The implementation principles and the technical effects thereof are similar, which won't be repeatedly described.

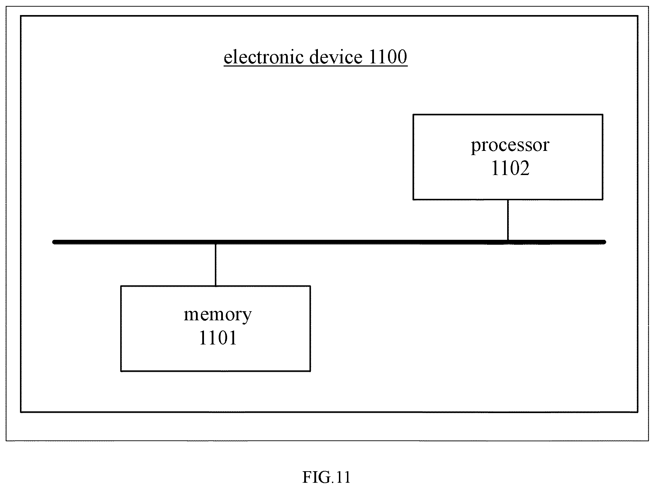

FIG. 11 is a structural schematic diagram of an electronic device provided in an embodiment of the present application. As shown in FIG. 11, the electronic device 1100 in the embodiment includes a memory 1101 and a processor 1102.

A computer program that can be loaded by the processor 1102 and execute the methods in the above embodiments is stored in the memory 1101.

The processor 1102 is connected to the memory 1101 for example by the buses.

Optionally, the electronic device 1100 further includes a transceiver. It should be noted that, the amount of the transceiver is not limited to one in the real application. The structure of the electronic device 1100 won't form a limitation of the embodiments of the present application.

The processor 1102 can be a CPU (Central Processing Unit), a universal processor, a DSP (Digital Signal Processor), an ASIC (Application Specific Integrated Circuit), a FPGA (Field Programmable Gate Array), or other programmable logic components, transistor logic components, hardware components or any combination thereof, which can realize or execute the logic frames, modules and circuits described in the embodiments of the disclosure in the present application. The processor 602 can also be the combination of realizing the calculation functions, such as a combination of one or more microprocessors, or a combination of the DSP and the microprocessor.

The bus may include a path to transfer information between the above components. The bus can be a PCT (Peripheral Component Interconnect) bus or an EISA (Extended Industry Standard Architecture) bus. The buses can be divided into an address bus, a data bus, and a control bus. A thick line is used for indicating the buses in the figure for ease of representation, but it is not intended that the buses only include one or one type.

The memory 1101 can be a ROM (Read Only Memory), other static random-access memory that can store static information and instructions, a RAM (Random Access Memory), other dynamic memory that can store information and instructions, an EEPROM (Electrically Erasable Programmable Read Only Memory), a CD-ROM (Compact Disk Read Only Memory), other compact disk memory, optical disk memory (including compact disc, laser disc, optical disc, digital universal disc, blue ray disc), disk storage media, other magnetic storage devices, or any other media that can carry or store the desired program code in the form of instructions or data structures and can be accessible by computers, but the memory 1101 is not limited thereto.

The memory 1101 is configured to store the application code executed the technical solution in the present application, and the processor 1102 controls the execution. The processor 1102 is configured to execute the application code stored in the memory 1101 to realize the content described in the methods of the above embodiments.

The electronic device includes but not limited to: the mobile terminals such as mobile phone, a laptop, digital radio receiver, PDA (personal digital assistant), PAD (tablet computer), PMP (portable multimedia player), car terminal (such as car navigation terminal), the fixed terminals such as digital TV (television) and desktop computer, and the server. The electronic device shown in FIG. 11 is only an example, which is not intended to limit the function and scope of use of the embodiments in the present application.

The device in the embodiment can be configured to execute any above-mentioned method in the embodiments. The implementation principles and the technical effects thereof are similar, which won't be repeatedly described.

The present application further provides a computer program product, including: a computer program, in which when the computer program is executed, the method in the above embodiments is realized.

Those skilled in the art should understand that: all or part of the steps of the above methods in the embodiments can be finished by the program-instruction-related hardware. The above program can be stored in a computer-readable storage medium. When the program is executed, the steps of the methods in the above embodiments are executed. The above storage medium includes mediums that can store the program code such as ROM, RAM, disk and optical disk.

## Claims

1. A charging method, **characterized in** comprising:
obtaining a power requirement at current moment; and
adjusting a power supply strategy of a photovoltaic assembly according to the power requirement to meet the power requirement at current moment.

2. The method according to claim 1, **characterized in that**, the adjusting a power supply strategy of a photovoltaic assembly according to the power requirement to meet the power requirement at current moment comprises:
determining whether there is a charging requirement in the power requirement at the current moment,
if there is a charging requirement at the current moment, charging a vehicle with a photovoltaic electric energy; and
if there is no charging requirement at the current moment, storing the photovoltaic electric energy in a battery and/or adjusting the photovoltaic electric energy according to power grid parameters and transmitting to a power grid.

3. The method according to claim 2, **characterized in that**, the charging a vehicle with a photovoltaic electric energy comprises:
determining whether the photovoltaic electric energy is higher than a preset electric energy threshold value,
if the photovoltaic electric energy is higher than the preset electric energy threshold value, charging the vehicle with the photovoltaic electric energy, storing remaining photovoltaic electric energy in the battery and/or adjusting remaining photovoltaic electric energy according to power grid parameters and transmitting to a power grid; and
if the photovoltaic electric energy is lower than the preset electric energy threshold value, charging the vehicle with the photovoltaic electric energy, a battery power and/or the power grid.

4. The method according to claim 3, **characterized in that**, the charging the vehicle with the photovoltaic electric energy, storing remaining photovoltaic electric energy in the battery and/or adjusting remaining photovoltaic electric energy according to power grid parameters and transmitting to a power grid if the photovoltaic electric energy is higher than the preset electric energy threshold value comprises:
if the photovoltaic electric energy is higher than the preset electric energy threshold value, obtaining a power grid electricity price at the current moment;
if the power grid electricity price is lower than a preset electricity price threshold value, charging the vehicle with the photovoltaic electric energy, and storing remaining photovoltaic electric energy in the battery; and
if the power grid electricity price is higher than the preset electricity price threshold value, charging the vehicle with the photovoltaic electric energy, and adjusting remaining photovoltaic electric energy according to power grid parameters and transmitting to the power grid.

5. The method according to claim 3, **characterized in that**, the charging the vehicle with the photovoltaic electric energy further comprises:
determining whether the charging requirement at the current moment is lower than a preset requirement threshold value, and whether the battery power is higher than a preset power threshold value; and
if the charging requirement at the current moment is lower than the preset requirement threshold value and the battery power is higher than the preset power threshold value, transmitting the battery power to the power grid.

6. The method according to claim 2, **characterized in that**, the storing the photovoltaic electric energy in the battery and/or adjusting the photovoltaic electric energy according to power grid parameters and transmitting to a power grid comprises:
determining a photovoltaic conversion rate at the current moment;
if the photovoltaic conversion rate at the current moment is higher than a preset conversion threshold value, adjusting the photovoltaic electric energy according to power grid parameters and transmitting to a power grid; and
if the photovoltaic conversion rate at the current moment is lower than the preset conversion threshold value, storing the photovoltaic electric energy in the battery.

7. The method according to claim 3, **characterized in that**, the storing the photovoltaic electric energy in a battery and/or adjusting the photovoltaic electric energy according to power grid parameters and transmitting to a power grid if there is no charging requirement at the current moment comprises:
if there is no charging requirement at the current moment, obtaining a power grid electricity price at the current moment;
if the power grid electricity price is lower than a preset electricity price threshold value, storing the photovoltaic electric energy in the battery, and adjusting remaining photovoltaic electric energy according to power grid parameters and transmitting to a power grid; and
if the power grid electricity price is higher than the preset electricity price threshold value, charging the vehicle with the photovoltaic electric energy, and adjusting the photovoltaic electric energy according to power grid parameters and transmitting to the power grid.

8. The method according to claim 2, **characterized in that**, the adjusting the photovoltaic electric energy according to power grid parameters and transmitting to a power grid comprises:
obtaining commercial power consumption at the current moment;
if the commercial power consumption is higher than a preset power consumption threshold value, adjusting the photovoltaic electric energy according to commercial power parameters to serve as commercial power.

9. The method according to claim 2, **characterized in that**, the charging the vehicle with the photovoltaic electric energy comprises:
determining whether the power grid is energized at the current moment; and
if the power grid is out of electricity, starting a charging pile with the photovoltaic electric energy, and charging the vehicle by the charging pile.

10. A charging apparatus, **characterized in** comprising: a battery, an energy management module, a grid on-off inverter, and a photovoltaic assembly, wherein,
the photovoltaic assembly is connected to the battery and the grid on-off inverter, and is configured to convert light energy into photovoltaic electric energy, store the photovoltaic electric energy in the battery, and/or, to perform a conversion of the photovoltaic electric energy between an alternating current and a direct current by using the grid on-off inverter to meet a power requirement at current moment;
the energy management module is connected to the battery, the photovoltaic assembly and the grid on-off inverter, and is configured to obtain the power requirement at the current moment and adjust a power supply strategy of the photovoltaic assembly according to the power requirement by using the battery and the grid on-off inverter to meet the power requirement at the current moment; and
the battery is connected to the grid on-off inverter, and is configured to adjust the battery to transmit battery electricity to a power grid according to the power requirement at the current moment when the photovoltaic electric energy is higher than a preset electric energy threshold value.

11. A charging apparatus, **characterized in** comprising:
a requirement obtaining module, configured to obtain a power requirement at current moment; and
a power supply strategy adjusting module, configured to adjust a power supply strategy of a photovoltaic assembly according to the power requirement to meet the power requirement at the current moment.

12. An electronic device, **characterized in** comprising:
a memory for storing program instructions; and
a processor for calling and executing the program instructions in the memory to implement the method according to any one of claims 1-9.

13. A computer-readable storage medium with a computer program stored thereon, **characterized in that**, the computer program is configured to implement the method according to any one of claims 1-9 when the computer program is executed.
